# EUROPÄISCHE PATENTSCHRIFT

(11) **EP 1 053 105 B1**
(45) Veröffentlichungstag und Bekanntmachung des Hinweises auf die Patenterteilung: **19.12.2001**
(21) Anmeldenummer: 99932417.1
(22) Anmeldetag: 12.01.1999
(51) Int. Cl.: B41J 2/175, F16F 1/36, F16F 3/087

(54) **FEDERELEMENT, INSBESONDERE FÜR TINTEN-KARTUSCHEN, UND TINTEN-KARTUSCHEN DAMIT**
SPRING ELEMENT, ESPECIALLY FOR INK CARTRIDGES, AND INK CARTRIDGES WITH A SPRING ELEMENT OF THIS TYPE
ELEMENT RESSORT, NOTAMMENT POUR CARTOUCHES D'ENCRE ET CARTOUCHES D'ENCRE MUNIES D'UN TEL ELEMENT

(30) Priorität: 29.01.1998 DE 29801461 U
(43) Veröffentlichungstag der Anmeldung: 22.11.2000
(73) Patentinhaber: BASF AKTIENGESELLSCHAFT, 67056 Ludwigshafen (DE)
(72) Erfinder: Völker, Martin, 67549 Worms (DE)
(86) Internationale Anmeldenummer: EP9900136
(87) Internationale Veröffentlichungsnummer: WO9938695

(56) Entgegenhaltungen:
- EP-A- 0 583 153
- EP-A- 0 583 154
- US-A- 4 422 084
- US-A- 5 325 119

## Beschreibung

Die Erfindung betrifft ein Federelement nach dem Oberbegriff des Anspruches 1 sowie eine Tinten-Kartusche damit.

Ein derartiges Federelement für Tinten-Kartuschen ist aus der US-PS 5 325 119 bekannt. Dabei ist das Federelement schlangenförmig ausgebildet und zwischen zwei den Druck in der Tinten-Kartusche regelnden Platten angeordnet. Auf diese Weise soll ein nicht-linearer Verlauf der Federfunktion erreicht werden.

Weiterhin beschreibt die US-PS 5 359 353 eine Druckfeder aus übereinander befestigten Federbögen, die zwei Platten auseinanderdrückt. Für Tintenbehälter in Druckern ist diese Platten- und Druckfederanordnung in einem Tintenbeutel vorhanden, worin ein vorbestimmter Unterdruck aufrechterhalten werden muß, um den Tintenbeutel am unkontrollierten Auslaufen zu hindern. Die Druckfeder sollte auch bei und nach der Tintenentnahme den Unterdruck aufrechterhalten und möglichst konstant halten.

Die bekannte Doppelbogenfeder ist dazu nicht in der Lage, da über den Verformungsweg der Feder die Federkraft mit dem Kompressionsweg ansteigt, so daß die Größe des Unterdrucks ebenfalls ansteigt. Die Doppelbogenfeder ist außerdem aus Metall gefertigt und muß speziell zusammen montiert werden, um ihre Form zu erhalten und dann an den Deckelteilen befestigt zu werden.

Für die dennoch unbefriedigende Funktion ist der relativ hohe Aufwand für die Herstellung und Montage kaum wirtschaftlich vertretbar.

Derartige Tintenkartuschen umfassen prinzipiell ein Schutzgehäuse mit einem Druckkopf zur Tintenentnahme und einem damit verbundenen, wenigstens teilweise flexiblen, Tintenaufnahmeraum, in dem das Unterdruck aufrechterhaltende Federelement enthalten ist.

Auch für andere Anwendungen, z.B. in der Meß- und Regeltechnik im Kraftfahrzeuggebiet und allgemein in pneumatisch oder hydraulischen Aggregaten sind Federelemente mit relativ konstanter Federkraft über einen wesentlichen Federweg-Teil mit Vorteil einsetzbar.

Der Erfindung liegt die Aufgabe zugrunde, ein derartig charakterisiertes Federelement bereit zu stellen.

Die Aufgabe wird gelöst durch ein Federelement mit wenigstens einem Einzelelement und mit relativ konstanter Federkraft über einen wesentlichen Federweg-Teil des Gesamtfederweges, wobei das Einzetelement im wesentlichen eine S-Bogenform und über den Gesamtfederweg eine ansteigende und abfallende Federkennlinie besitzt, und das Federelement aus wenigstens einem weiteren Einzelelement besteht, das eine Einzel-Bogenform aufweist und über den wesentlichen Federweg-Teil des Federelementes eine ansteigende Federkennlinie besitzt.

Damit wird ein einfaches und funktionsfähiges Federelement bereitgestellt.

In praktischer Ausführung kann das wenigstens eine weitere Einzelelement in die S-Bogenform-Einzelelemente integriert sein, insbesondere als Federschlaufe innerhalb der Federlänge. Dadurch vermindert sich die Zahl der Einzelelemente des Federelements und vereinfacht sich seine Herstellung.

Der Federweg des wenigstens einen weiteren Einzelelements kann zweckmäßig etwa die Hälfte des Gesamtfederweges betragen, so daß die im wesentlichen konstante Federkraft über den wesentlichen Federweg-Teil des Federelements realisiert wird.

Es ist jedoch auch denkbar, andere Teilbereiche des Gesamtfederweges mit geeigneten Federkennlinien der Einzelelemente für die Erzeugung einer etwa konstanten Federkraft auszubilden.

Praktisch können das oder die Einzelelemente des Federelements zwischen zwei Rahmenteilen als Druckplatten angeordnet und befestigt sein.

Herstellungsmäßig vorteilhaft ist eine Ausbildung des Federelementes mit den Rahmenteilen oder Druckplatten im Spritzguß.

Das oder die Einzelelemente können vorteilhaft über ihre Länge im Querschnitt unterschiedliche Breiten bei etwa konstanter Höhe aufweisen und damit einen im wesentlichen konstanten Spannungsverlauf an der Oberfläche der Einzelelemente besitzen.

In zweckmäßiger Anordnung können die Einzelelemente mit S-Bogenform aus einem Mittelelement und zwei dazu gleich beabstandeten Seitenelementen bestehen, wobei das Mittelelement etwa die doppelte Federkraft relativ zur Federkraft jedes Seitenelementes besitzt.

Es ist aus Symmetriegründen günstig, wenn zwei weitere Einzelelemente vorgesehen sind, die im wesentlichen Federweg-Teil, insbesondere ab etwa der Hälfte des Gesamtfederweges des Federelementes wirksam sind.

Es ist ebenfalls günstig, wenn das oder die weiteren Einzelelemente etwa symmetrisch zum Mittelelement angeordnet sind.

Es ist spritzgußtechnisch günstig, wenn wenigstens eines der Rahmenteile als Deckelteil mit Ausschnitten ausgebildet ist, die die Form der Projektion der S-Bogenform Einzelelemente aufweisen.

Ein weiterer Vorteil wird erhalten, wenn das Federelement aus einem Kunststoff-Material mit hoher Kristallität, ausgeprägter Streckgrenze und unterhalb der Streckgrenze mit hoher Rückstellkraft besteht.

Damit werden ausgezeichnete Federeigenschaften über eine lange Lebensdauer sichergestellt.

Zweckmäßig kann dafür ein Polyazetal, insbesondere ein Polyoxymethylen (POM), eingesetzt werden, das sich gut im Spritzguß verarbeiten läßt.

Es ist vorteilhaft auch möglich, andere thermoplastische Kunststoffe mit Federeigenschaften einzusetzen.

Mit Vorteilen ist das erfindungsgemäße Federelement für die Herstellung von Tinten-Kartuschen als Massenartikel und deren Funktion einsetzbar.

Gegenstand der Erfindung ist weiterhin eine Tinten-Kartusche mit den Merkmalen des Anspruches 17.

Es ist ferner zweckmäßig, das oder die Einzelelemente des oder der Federelemente zwischen zwei Rahmenteilen anzuordnen und daran zu befestigen.

Es ist auch überraschend wirtschaftlich, wenn wenigstens eines der Rahmenteile mit Ausschnitten zur Ausbildung der Einzelelemente-Formen ausgeführt ist und so das wenigstens eine Federelement mit wenigstens einem Rahmenteil einstückig im Spritzguß, insbesondere aus Polyoxymethylen, hergestellt ist.

Es hat sich als ausgesprochen vorteilhaft herausgestellt, wenn das wenigstens eine Federelement aus einem Kunststoff-Material mit hoher Kristallinität, ausgeprägter Streckgrenze und unterhalb der Streckgrenze mit einer hohen Rückstellkraft besteht, insbesondere aus einem Polyazetal.

Auch der Einsatz des erfindungsgemäßen Federelements in Druckfarben-Kartuschen ist gleichermaßen vorteilhaft.

Ausführungsbeispiele von Federelementen der Erfindung sind nachfolgend beschrieben und in der Zeichnung dargestellt.

### In der Zeichnung stellen dar:

Figur 1
Ein Federelement mit Rahmenteilen gemäß der Erfindung in perspektivischer Ansicht.

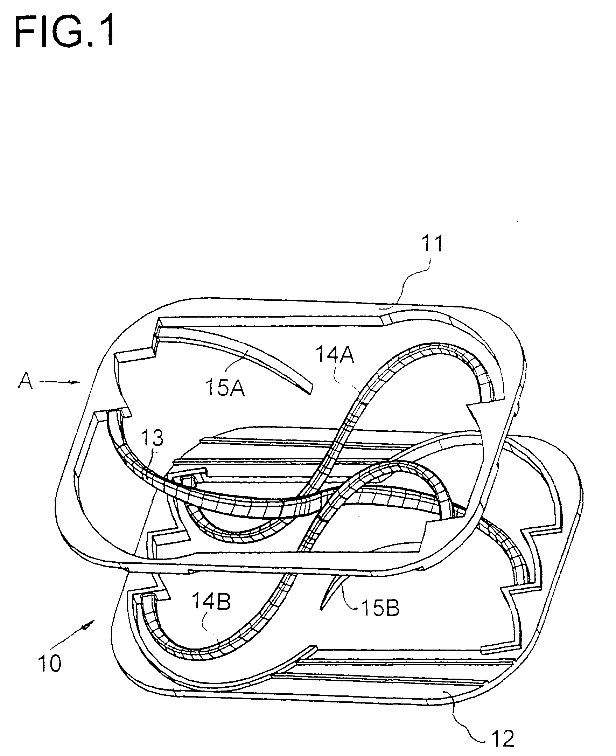

Figur 2
Eine Seitenansicht A des Federelementes nach Figur 1.

Figur 3
Eine Draufsicht auf ein Rahmenteil eines Federelements nach Figur 1.

Figur 3A
Eine Draufsicht auf ein Deckelteil statt Rahmenteil eines Federelementes nach Figur 1

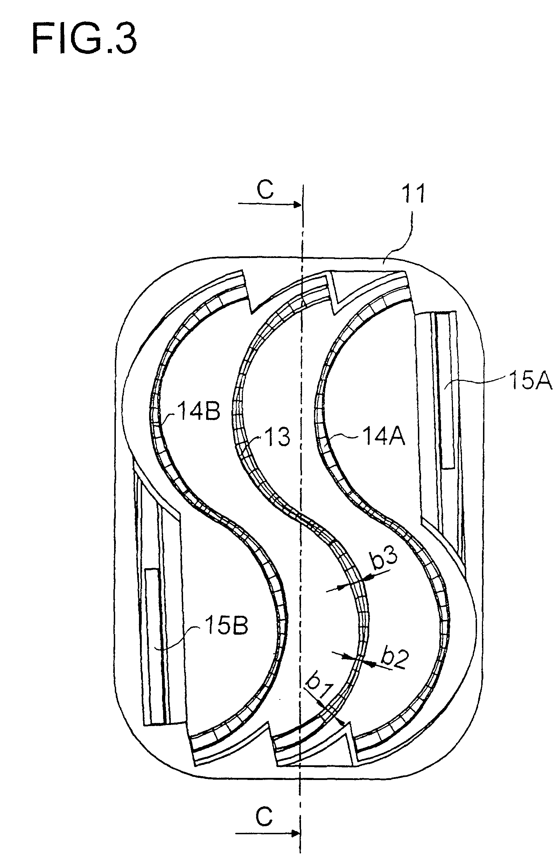

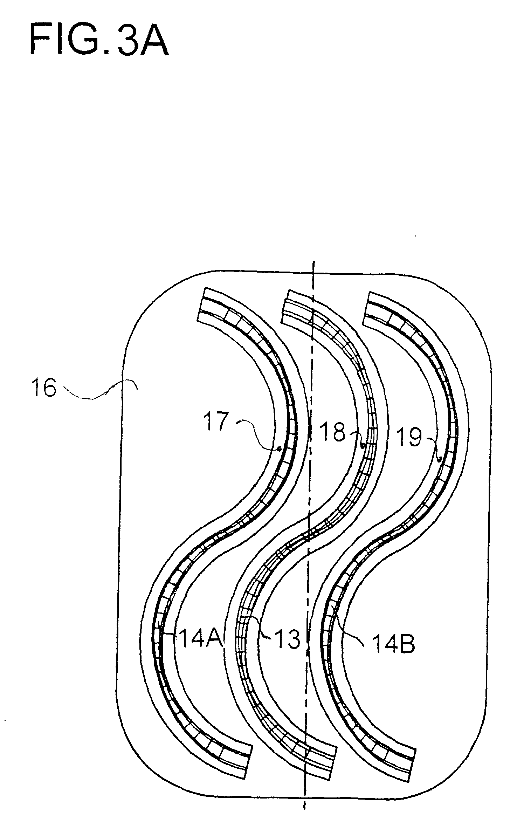

Figur 4
Eine Schnittansicht C-C gemäß Figur 3.

Figur 5
Eine Variante des Federelementes mit S-Dreiecksbogenform

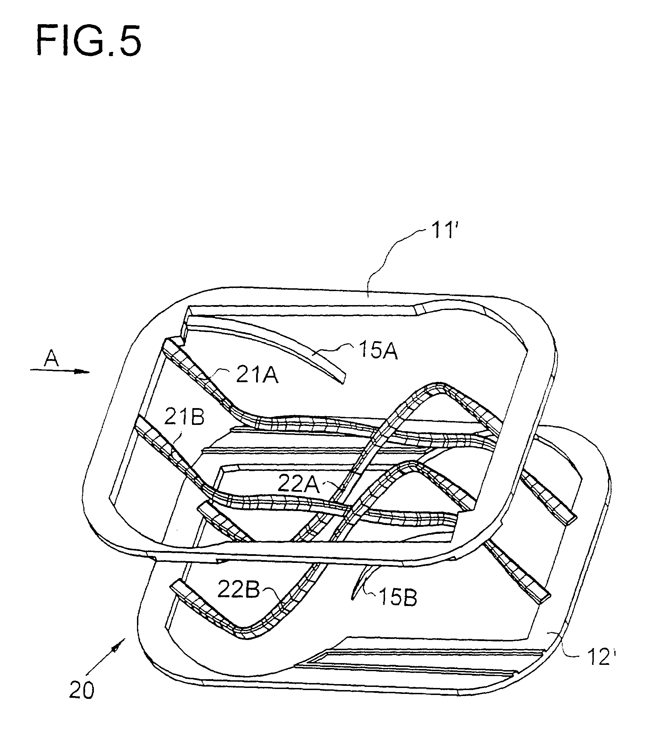

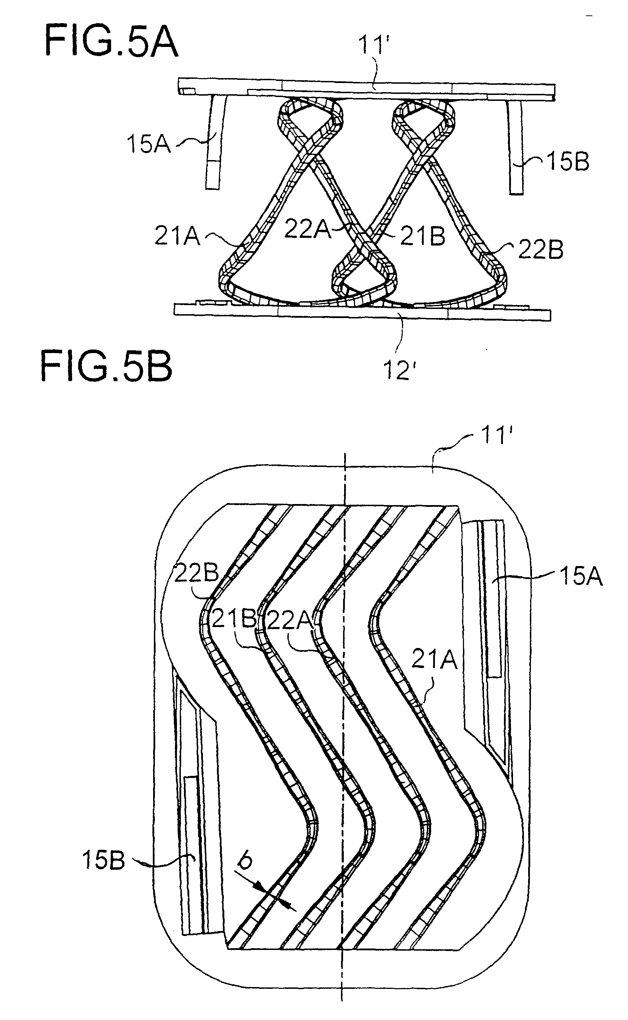

Figur 5A
Eine Ansicht A des Federelementes nach Figur 5

Figur 5B
Eine Draufsicht eines Federelementes nach Figur 5.

Figur 6
Eine weitere Variante des Federelementes mit integriertem Federschlaufenteil.

Figur 7
Die Federkennlinie der erfindungsgemäßen Federelemente.

Figur 1 zeigt ein Federelement 10 mit Rahmenteilen 11 und 12. Zwischen den Rahmenteilen 11 und 12 erstrecken sich drei S-Bogenform-Einzelelemente 13-14A und B, wovon 13 das Mittelelement ist und 14A und 14B die Seitenelemente sind. Die Einzelelemente 13, 14A und B sind mit ihren Enden mit den Rahmenteilen 11 und 12 verbunden, d.h. entweder geeignet befestigt oder im Spritzguß einstückig mit den Rahmenteilen 11 und 12 hergestellt. Es ist auch denkbar, nur ein einziges Einzelelement oder wenigstens zwei Einzelelemente zu verwenden, wenn dasselbe bzw. dieselben den angegebenen Federkennlinienverlauf besitzen. Wie in Figur 1 erkennbar ist, können die Einzelelemente vorteilhaft mit unterschiedlichen Querschnitten über ihre Länge ausgebildet sein, zweckmäßig mit unterschiedlicher Breite (bl-b3 in Figur 3) bei etwa konstanter Höhe des Querschnitts-Rechtseckform. Damit sind unterschiedliche Oberflächenspannungen der Einzelelemente 13, 14A und B abbaubar, so daß dieselben im elastischen Verformungsbereich bleiben, was für Kunststoff-Material besonders wichtig ist. Als Kunststoff-Material ist ein Polyazetal besonders geeignet, insbesondere ein Polyoxymethylen (POM) mit Federeigenschaften, das heißt mit hoher Kristallinität, ausgeprägter Streckgrenze und unterhalb der Streckgrenze einer hohen Rückstellkraft. Besonders geeignet für die beschriebenen Federelemente 10, hat sich das POM-Material Ultraform® W 2320 herausgestellt. (Ultraform® ist ein eingetragenes Warenzeichen der Ultraform GmbH, Ludwigshafen). Es sind auch andere thermoplastische Kunststoffe mit Federeigenschaften als Material geeignet.

Als weitere Einzelelemente können die Einzel-Bogenform-Federn 15A und B vorgesehen sein, die etwa symmetrisch zum Mittelelement 13 angeordnet sein sollten und die jeweils nur einseitig, Federn 15A und 15B, jeweils am Rahmenteil 11 oder 12 befestigt bzw. einstükkig damit ausgebildet sind, und deren andere Enden bis etwa zur Hälfte des Zwischenraums zwischen den Rahmenteilen 11 und 12 reichen und somit erst etwa bei Erreichen der zweiten Hälfte des Gesamtfederweges wirksam werden können. Diese Federn 15A und B sind mit im wesentlichen konstanter Breite und Höhe im Querschnitt ausgebildet, sie können aus Spannungsreduzierungsgründen jedoch auch mit einer verjüngt zulaufenden Spitze ausgebildet sein.

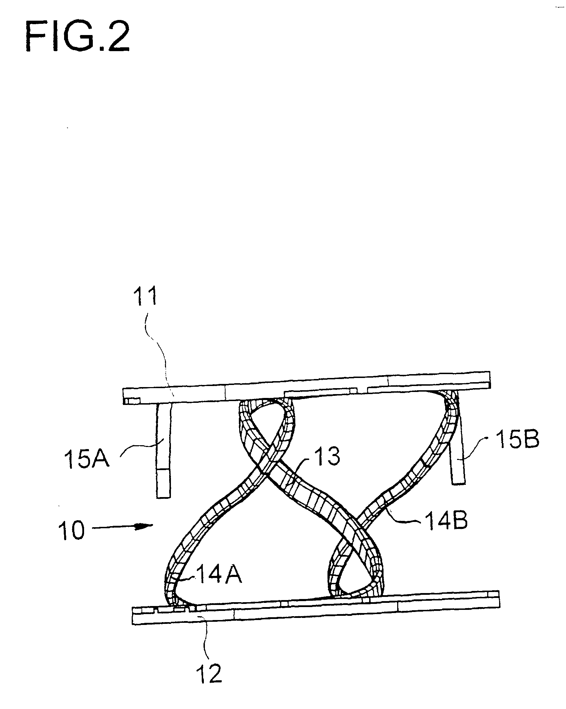

Figur 2 zeigt eine Ansicht A des Federelementes 10 aus Figur 1. Es sind die Einzelelemente: Mittelelement 13 und Seitenelemente 14A und 14B als wendelartig gedrehte Federn sowie die in dieser Ansicht gerade vom Rahmenteil 11 hervorragenden Einzel-Bogenform-Federn 15A und 15B, gut erkennbar.

In Figur 3 ist sichtbar, daß sich die Breite z.B. b1>b2<b3 über die Länge jedes Einzelelements 13, 14A, 14B ändert zum Spannungsabbau oder -ausgleich, wie schon oben erwähnt.

Durch Verringern der Breite lassen sich dabei hohe Spannungen, die in erster Linie an der Oberfläche auftreten, abbauen in einen etwa konstanten Spannungsbereich von etwa 40 (Mega Pascal) MPa oder N/mm².

Figur 3A zeigt die Draufsicht auf ein Federelement mit einem, im wesentlichen geschlossenen Deckelteil 16 mit S-Bogenform-Aus-schnitten 17, 18 und 19, in denen der Reihenfolge nach die S-Bogenform-Einzelelemente 14B, 13 und 14A sichtbar sind. Durch diese Ausschnitte müssen die Werkzeugteile zum Ausformen der S-Bogenform-Einzelelemente 13, 14A und B hindurchgeführt werden. Die weiteren Einzelelemente 15A und B werden durch seitliche Schieber ausgeformt.

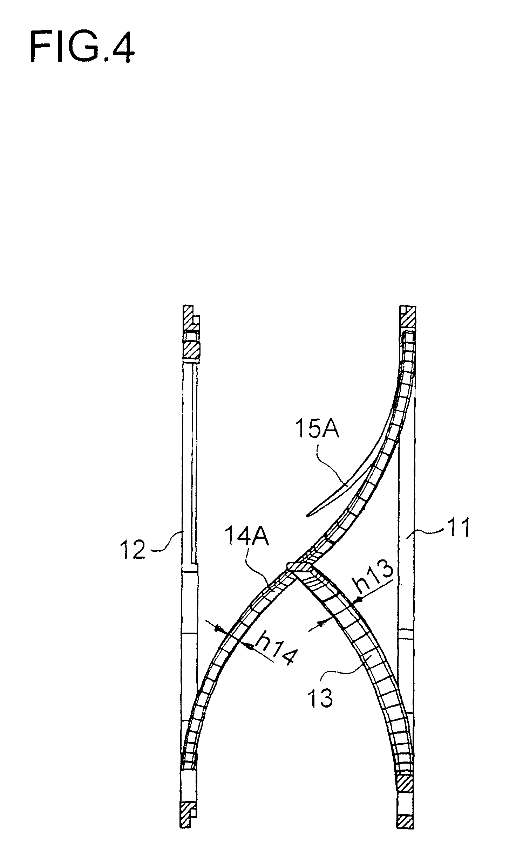

Die Schnittansicht gemäß Figur 3 ist in Figur 4 dargestellt. Hierin ist das S-Bogenform-Seitenelement 14A und das weitere Einzelelement 15A vollständig und das Mittelelement 13 nur zur Hälfte sichtbar, insbesondere auch in den Größenverhältnissen.

Die Höhe h13 ist als etwa doppelt so groß wie die Höhe h14 erkennbar, wodurch die Federkraft des Mittelelements 13 etwa doppelt so groß wie die jedes Einzelelements 14A, 14B eingestellt ist. Es ist ohne weiteres auch jedes andere gewünschte Verhältnis einstellbar durch entsprechende Änderung der Dimensionierungsverhältnisse der Einzelfedern 13 und 14A und B.

Die S-Bogenform als etwa Kreisbogenform ist beispielhaft dargestellt. Prinzipiell ist jede stetige Kurvenform geeignet, soweit eine Zentralsymmetrie in Bezug auf die Mitte des Einzelelements vorhanden ist, die in den Ausführungsbeispielen auch mit der Mittelebene zwischen den Rahmen- und/oder Deckelteilen zusammenfällt.

In Figur 5 ist eine Variante 20 des Federelements 10 mit S-Bogen-form-Einzelelementen gemäß Figur 1 gezeigt, in der die S-Kreis-oder S-Sinus-Bogenform durch eine S-Dreiecks-Bogenform ersetzt wurde. Besonders im Spitzenbereich der S-Dreiecks-Bogenform-Einzelelemente 21A und B und 22A und B ist eine Breitenverringerung im Querschnitt der Einzelelemente notwendig, soweit Kunststoff als Federmaterial verwandt wird. Unterschiedlich zur Ausführung des Federelements in Figur 1 sind hier statt 3 S-Bogenform-Einzelelementen 4 S-Dreiecks-Bogenform Einzelelemente 21A und B und 22A und B vorhanden. Zwischen der Kreis-Bogenform und der Dreiecks-Bogenform sind alle Arten von z.B. Parabel-Bogenformen oder anderen Bogenformen verwendbar. Die Rahmenteile sind in Figur 5 mit 11' und 12' bezeichnet. Die weiteren Einzelelemente sind wieder mit 15A und 15B bezeichnet.

In Figur 5A ist wiederum eine Ansicht (umgeklappt) aus der Richtung A in Figur 5 dargestellt.

In Figur 5B sind im Rahmenteil 11' die S-Dreiecks-Bogenform-Einzelelemente 22B, 21B, 22A und 21A sichtbar. Die unterschiedlichen Breiten b über die Länge jedes der Einzelelemente sind auch hier gut erkennbar

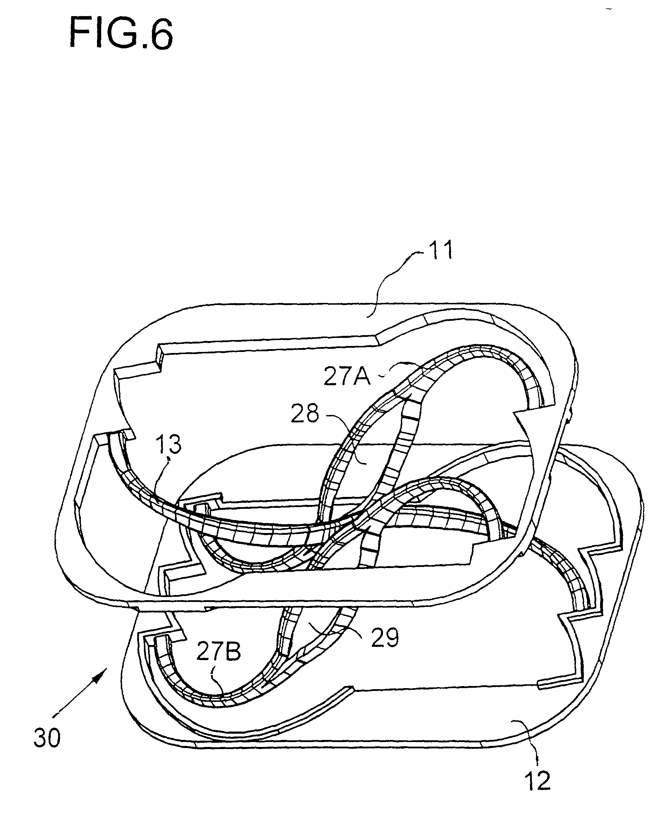

In Figur 6 ist die Variante 30 eines Federelementes 10 mit zwei Seitenelementen 27A und B und jeweils integriertem Schlaufenteil 28 bzw. 29 dargestellt, wobei letzterer im Mittelbereich des S-Bogenform-Einzelteils (27 A bzw. 27B) liegenden, aus zwei Parallelfedern gebildeten Federschlaufe besteht. Diese aus Parallelfedern gebildeten Federschlaufen 28 und 29 sollen, wie die Federn 15A und 15B in Figur 1 sicherstellen, daß eine ansteigende Federkraftcharakteristik die abfallende Charakteristik der S-Bogen-formfeder (Einzelelemente 27A und b und 13) etwa kompensiert, um eine etwa konstante Federkraft über einen wesentlichen Federweg-Teil des Gesamtfederweges des Federelementes zu realisieren.

Die Form und Größe der Federschlaufe sowie die Querschnitte der die Schlaufe bildenden Parallelfedern sind geeignet wählbar und einstellbar. Im gezeichneten Beispiel soll auch etwa der konstante Federkraft-Teil ab dem halben Gesamtfederweg beginnen.

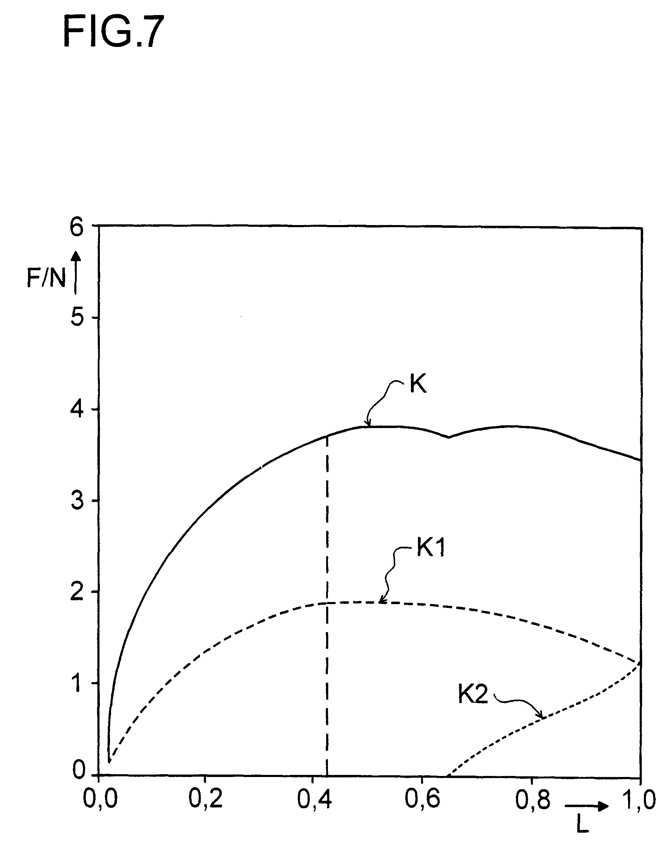

Figur 7 zeigt eine mittels der Federelement-Ausführung 10 oder 20 oder 30 in Figuren 1, 5 und 6 realisierte Federkennlinie K, die über etwa 40 % (0,4 L) der Gesamtfederlänge (1 L) einen ansteigenden Verlauf hat und dann bis etwa 0,8 L einen etwa flachen Teil (etwa konstante Federkraft F) aufweist um danach zwischen 0,8 L und 1 L etwas abzufallen. Die Federkraft F ist im Bereich von etwa 3.7 N bis etwa 3.8 N etwa konstant.

Die Kennlinie K resultiert aus der im unteren Teil des Diagramms dargestellten, etwa parabelförmig ansteigenden und abfallenden Kennlinie K1, die durch die Einzelelemente 14A und B bzw. durch das Einzelelement 13, bzw. die Einzelelemente 21A und B bzw. 22A und B bzw. 27 A und B erzeugt wird, und die bei etwa 0,65 L beginnende, ebenfalls parabelförmig ansteigende Kennlinie K2, die durch die weiteren Einzelelemente 15A und B bzw. die Federschlaufen 28 und 29 erzeugt wird. Als Resultierende ergibt sich die Kennlinie K. Durch die Wahl der Federn für die weiteren Einzelelemente 15A und 15B bzw. die Federschlaufen 28 und 29 läßt sich der Winkel der auslaufenden Kennlinie K im Bereich von 0,65 L bis 1,0 L einstellen.

Für die Spritzgußherstellung sind lediglich zwei Werkzeughälften zur Aufnahme der Rahmenteile und/oder Deckelteile sowie von zwei Schiebern (Richtung A und Gegenrichtung) notwendig. Dabei ist die Ausführung mit zwei Rahmenteilen am günstigsten, da beim Deckelteil 16, 16' das Werkzeug für die S-Bogenform-Ausschnitte aufwendiger ist. Die Deckelteile 16, 16' haben eine geschlossenere Außenfläche als die Rahmenteile, so daß eine Verwendung für Tinten-Kartuschen mit solchen Deckelteilen oder mit Rahmenteilen und daran befestigbaren, relativ geschlossenen Deckelscheiben zweckmäßiger ist. Die Befestigung der Rahmenteile und/oder Deckelscheiben an den flexiblen Teilen des Tintenaufnahmeraumes erfolgt nachträglich.

Die beschriebenen Federelemente der Figuren 1, 5 und 6 eigen sich z.B. zum Einsatz in Kartuschen von Tintenstrahldruckern der Firma Hewlett and Packard und gewährleisten eine hervorragende Funktionsfähigkeit über ihre gesamte Lebensdauer.

Wie schon eingangs erwähnt, sind jedoch auch ähnliche Anwendungen wie für Druckfarben-Kartuschen in größeren drucktechnischen Anlagen möglich.

Außerdem sind vielfältige Anwendungen in pneumatischen und hydraulischen Systemen, wie z.B. in Kraftfahrzeugen und Regelanlagen allgemein, insbesondere für die Druckkonstanthaltung möglich und vorteilhaft.

Die Erfindung betrifft Tintenkartuschen mit erfindungsgemäßen Federelementen und ein erfindungsgemäßes Federelement selbst mit relativ konstanter Federkraft über einen wesentlichen Federweg-Teil des Gesamtfederweges und besteht aus wenigstens einem, zwei oder drei oder mehr ersten Einzelelementen von im wesentlichen S-Bogen- oder S-Kurvenform mit einer ersten Federcharakteristik und aus wenigstens einem zweiten Einzelelement von im wesentlichen Einzel-Bogen- oder Kurvenform mit einer zweiten Federcharakteristik, wobei sich über den wesentlichen Federweg-Teil eine resultierende Federcharakteristik mit relativ konstanter Federkraft ergibt. Praktische Ausgestaltungen mit Rahmenteilen und/ oder Deckelteilen sind günstig im Spritzguß herstellbar. Die Einzelelemente sind über ihre Länge mit unterschiedlichen Querschnittsabmessungen versehen zum Spannungsabbau an spannungsgefährdeten Biegestellen.

Anwendbar sind die Federelemente für Tinten- oder Farben-Kartuschen zur unterdruckerzeugenden Entnahme der Flüssigkeit oder Paste oder auch allgemein zur Druckkonstanthaltung in pneumatischen und hydraulischen Systemen allgemein.

## Patentansprüche

1. Federelement mit wenigstens einem Einzelelement (13, 14A, 14B bzw. 21A, 21B, 22A, 22B bzw. 13, 27A, 27B) und mit relativ konstanter Federkraft über einen wesentlichen Federweg-Teil des Gesamtfederweges (L), insbesondere für Tinten-Kartuschen, **dadurch gekennzeichnet, daß** das Einzetelement (10, 20, 30) im wesentlichen eine S-Bogenform und über den Gesamtfederweg (L) eine ansteigende und abfallende Federkennlinie (K1) besitzt und das Federelement aus wenigstens einem weiteren Einzelelement (15A, 15B, bzw. 28, 29) besteht, das eine Einzel-Bogenform aufweist und über den wesentlichen Federweg-Teil eine ansteigende Federkennlinie (K2) besitzt.

2. Federelement nach Anspruch 1, **dadurch gekennzeichnet, daß** das wenigstens eine weitere Einzelelement (28, 29) in die S-Bogenform-Einzelelemente integriert ist (Figur 6).

3. Federelement nach Anspruch 2, **dadurch gekennzeichnet, daß** das wenigstens eine weitere Einzelelement (28, 29) als Federschlaufe innerhalb der Federlänge ausgebildet ist.

4. Federelement nach Anspruch 1 und einem oder mehreren der Ansprüche 2 und 3, **dadurch gekennzeichnet, daß** der Federweg des wenigstens einen weiteren Einzelelementes (15A, 15B) etwa die Hälfte des Gesamtfederweges (L) beträgt.

5. Federelement nach Anspruch 1 und einem oder mehreren der Ansprüche 2 bis 4, **dadurch gekennzeichnet, daß** das oder die Einzelelemente (13, 14A, 14B, 15A, 15B bzw. 21A, 21B, 22A, 22B, 15A, 15B bzw. 13, 27A, 27B, 28, 29) zwischen zwei Rahmenteilen (11, 12 bzw. 11' 12') angeordnet und daran befestigt sind.

6. Federelement nach Anspruch 1 und einem oder mehreren der Ansprüche 2 bis 5, **dadurch gekennzeichnet, daß** das Federelement (10, 20, 30) einstückig im Spritzguß hergestellt ist.

7. Federelement nach einem oder mehreren der Ansprüche 1-6, **dadurch gekennzeichnet, daß** das oder die Einzelelemente (13, 14A, 14B bzw. 21A, 21B, 22A, 22B bzw. 13, 27A, 27B) über ihre Länge im Querschnitt unterschiedliche Breiten (b1, b2, b3 in Figur 3, b in Figur 5B) bei etwa konstanter Höhe aufweisen und über die Federlänge einen im wesentlich konstanten Spannungsverlauf an ihrer Oberfläche aufweisen.

8. Federelement nach einem oder mehreren der Ansprüche 1 bis 7, **dadurch gekennzeichnet, daß** die Einzelelemente mit S-Bogenform aus einem Mittelelement (13) und zwei dazu gleich beabstandeten Seitenelementen (14A und 14B bzw. 27A und 27B) besteht, wobei das Mittelelement (13) etwa die doppelte Federkraft relativ zur Federkraft jedes Seitenelementes (14A und 14B bzw. 27A und 27B) besitzt.

9. Federelement nach einem oder mehreren der Ansprüche 1 bis 8, **dadurch gekennzeichnet, daß** zwei weitere Einzelelemente (15A und 15B bzw. 28 und 29) vorgesehen sind, die im wesentlichen Federweg-Teil, insbesondere bei etwa der Hälfte des Gesamtfederweges (L) des Federelementes (10 bzw. 20 bzw. 30) wirksam sind.

10. Federelement nach einem oder mehreren der Ansprüche 1 bis 8, **dadurch gekennzeichnet, daß** das oder die weiteren Einzelelemente (15A und 15B bzw. 27A und 27B) etwa symmetrisch zum Mittelelement (13) angeordnet ist.

11. Federelement nach Anspruch 1 und 5 und einem oder mehreren der Ansprüche 4 und 6 bis 16, **dadurch gekennzeichnet, daß** wenigstens eines der Rahmenteile (11, 12 bzw. 11', 12') als Deckelteil (16) mit Ausschnitten (17-19) ausgebildet ist, die die Form der Projektion der S-Bogenform-Einzelelemente (13, 14A, 14B) bzw. der S-Dreiecks-Bogenform-Einzelelemente (21A, 21B, 22A, 22B) aufweisen.

12. Federelement nach einem oder mehreren der Ansprüche 1 bis 11, **gekennzeichnet durch** ein Kunststoff-Material mit hoher Kristallinität, ausgeprägter Streckgrenze und unterhalb der Streckgrenze mit einer hohen Rückstellkraft.

13. Federelement nach Anspruch 12, **gekennzeichnet durch** ein Polyazetal, insbesondere Polyoxymethylen als Material.

14. Federelement nach Anspruch 12, **dadurch gekennzeichnet, daß** das Material ein thermoplastischer Kunststoff mit Federeigenschaften ist.

15. Federelement nach Anspruch 1 oder einem oder mehreren der Ansprüche 2 bis 14, **gekennzeichnet durch** die Verwendung in einer Tinten-Kartusche.

16. Federelement nach Anspruch 1 oder einem oder mehreren der Ansprüche 2 bis 14, **gekennzeichnet durch** die Verwendung in einer Druckfarben-Kartusche.

17. Tinten-Kartusche, umfassend ein Schutzgehäuse mit einem Entnahmekopf für die Tinte und einem damit in Verbindung stehenden Tintenaufnahmeraum, der teilweise flexibel ist und in dem ein Unterdruck aufrechterhaltendes Federelement, welches aus wenigstens einem Einzelelement (13, 14A, 14B bzw. 21A, 21B, 22A, 22B bzw. 13, 27A, 27B) besteht, enthalten ist, womit eine relativ konstante Federkraft über einen wesentlichen Federweg-Teil des Gesamtfederweges (L) ausübbar ist, **dadurch gekennzeichnet, daß** das Einzelelement (10, 20, 30) im wesentlichen eine S-Bogenform und über den Gesamtfederweg (L) eine ansteigende und abfallende Federkennlinie (K1) besitzt und das Federelement aus wenigstens einem weiteren Einzelelement (15A, 15B bzw. 28, 29) besteht, das eine Einzel-Bogenform aufweist und über den wesentlichen Federweg-Teil eine ansteigende Federkennlinie (K2) besitzt.

18. Tinten-Kartusche nach Anspruch 17, **dadurch gekennzeichnet, daß** das oder die Einzelelemente (13, 14A, 14B, 15A, 15B bzw. 13, 27A, 27B, 28, 29) zwischen zwei Rahmenteilen (11, 12 bzw. 11', 12') angeordnet und daran befestigt sind, wobei die Rahmenteile (11, 12 bzw. 11', 12') mit flexiblen Teilen des Tintenaufnahmeraums verbunden sind.

19. Tinten-Kartusche nach Anspruch 18, **dadurch gekennzeichnet, daß** wenigstens eines der Rahmenteile (11, 12 bzw. 11', 12') als Deckelteil (16) mit Ausschnitten (17 - 19) ausgebildet ist, die die Form der Projektion der S-Bogenform-Einzelelemente (13, 14A, 14B) bzw. der S-Dreiecks-Bogenform-Einzelelemente (21A, 21B, 22A, 22B) aufweisen, und das oder die Federelemente mit den Rahmenteilen (11, 12 bzw. 11', 12') einstückig im Spritzguß, insbesondere aus Polyoxymethylen, herstellt sind.

20. Tinten-Kartusche nach Anspruch 17 oder 18, **dadurch gekennzeichnet, daß** das oder die Federelemente aus einem Kunststoff-Material mit hoher Kristallinität, ausgeprägter Streckgrenze und unterhalb der Streckgrenze mit einer hohen Rückstellkraft bestehen, insbesondere aus einem Polyazetal.

## Claims

1. A spring element having at least one individual element (13, 14A, 14B or 21A, 21B, 22A, 22B or 13, 27A, 27B) and having a relatively constant spring force over a substantial part of the overall spring travel (L), in particular for ink cartridges, wherein the individual element (10, 20, 30) essentially has an S-bow shape and a spring characteristic (K1) which rises and falls over the overall spring travel (L), and the spring element comprises at least one further individual element (15A, 15B or 28, 29), which has a single-bow shape and a spring characteristic (K2) which rises over the substantial part of the spring travel.

2. A spring element as claimed in claim 1, wherein the at least one further individual element (28, 29) is integrated into the S-bow-shape individual elements (Figure 6).

3. A spring element as claimed in claim 2, wherein the at least one further individual element (28, 29) is designed as a spring loop within the length of the spring.

4. A spring element as claimed in claim 1 and one or more of claims 2 and 3, wherein the spring travel of the at least one further individual element (15A, 15B) is approximately half the overall spring travel (L).

5. A spring element as claimed in claim 1 and one or more of claims 2 to 4, wherein the individual element or elements (13, 14A, 14B, 15A, 15B or 21A, 21B, 22A, 22B, 15A, 15B or 13, 27A, 27B, 28, 29) is or are arranged between two frame parts (11, 12 or 11', 12') and fastened thereto.

6. A spring element as claimed in claim 1 and one or more of claims 2 to 5, wherein the spring element (10, 20, 30) is produced in one piece by injection molding.

7. A spring element as claimed in one or more of claims 1 to 6, wherein the individual element or elements (13, 14A, 14B or 21A, 21B, 22A, 22B or 13, 27A, 27B) has or have over its or their length cross-sectionally differing widths (b1, b2, b3 in Figure 3, b in Figure 5B) with approximately constant height and has or have over the length of the spring a substantially constant diffusion of stress at its or their surface.

8. A spring element as claimed in one or more of claims 1 to 7, wherein the individual elements of S-bow shape comprise a central element (13) and two side elements (14A and 14B or 27A and 27B) spaced equally apart from it, the central element (13) having approximately double the spring force relative to the spring force of each side element (14A and 14B or 27A and 27B).

9. A spring element as claimed in one or more of claims 1 to 8, wherein there are provided two further individual elements (15A and 15B or 28 and 29) which are effective in the substantial part of the spring travel, in particular over about half of the overall spring travel (L) of the spring element (10 or 20 or 30).

10. A spring element as claimed in one or more of claims 1 to 8, wherein the further individual element or elements (15A and 15B or 27A and 27B) is or are arranged approximately symmetrically with respect to the central element (13).

11. A spring element as claimed in claims 1 and 5 and one or more of claims 4 and 6 to 16, wherein at least one of the frame parts (11, 12 or 11', 12') is designed as a cover part (16) with cutouts (17-19), which have the shape of the projection of the S-bow-shape individual elements (13, 14A, 14B) or of the S-triangle-bow-shape individual elements (21A, 21B, 22A, 22B).

12. A spring element as claimed in one or more of claims 1 to 11, composed of a plastics material which has high crystallinity, a high yield point and, below the yield point, high resilience.

13. A spring element as claimed in claim 12, with a polyacetal, in particular polyoxymethylene, as the material.

14. A spring element as claimed in claim 12, wherein the material is a thermoplastic with resilient properties.

15. A spring element as claimed in claim 1 or one or more of claims 2 to 14, for use in an ink cartridge.

16. A spring element as claimed in claim 1 or one or more of claims 2 to 14, for use in a printing-ink cartridge.

17. An ink cartridge substantially comprising a protective housing with a removal head for the ink and an ink-receiving space which is connected to the latter, is partially flexible and in which a spring element maintaining negative pressure and which comprises at least one individual element (13, 14A, 14B or 21A, 31B, 22A, 22B or 13, 27A, 27B) is contained, whereby a relatively constant spring force can be exerted over a substantial part of the overall spring travel, wherein the individual element (10, 20, 30) essentially has an S-bow shape and a spring characteristic (K1) which rises and falls over the overall spring travel (L), and the spring element comprises at least one further individual element (15A, 15B or 28, 29), which has an a single-bow shape and a spring characteristic (K2) which rises over the substantial part of the spring travel.

18. An ink cartridge as claimed in claim 17, wherein the individual element or elements (13, 14A, 14B, 15A, 15B or 13, 27A, 27B, 28, 29) is or are arranged between two frame parts (11, 12 and 11', 12') and fastened thereto, the frame parts being connected to flexible parts of the ink-receiving space (11, 12 and 11', 12').

19. An ink cartridge as claimed in claim 18, wherein at least one of the frame parts (11, 12 or 11', 12') is designed as a cover part (16) with cutouts (17 - 19), which have the shape of the projection of the S-bow-shape individual elements (13, 14A, 14B) or of the S-triangle-bow shape individual elements (21A, 21B, 22A, 22B), or the spring element or elements is or are produced with the frame parts (11, 12 and 11', 12') in one piece by injection molding, in particular from polyoxymethylene.

20. An ink cartridge as claimed in claim 17 or 18, wherein the spring element or elements is or are composed of a plastics material which has high crystallinity, a high yield point and, below the yield point, high resilience, in particular of a polyacetal.

## Revendications

1. Elément ressort ayant au moins un élément individuel (13, 14A, 14B ou 21A, 21B, 22A, 22B ou 13, 27A, 27B respectivement) et ayant une force de ressort relativement constante sur une partie de l'ensemble de la course du ressort essentielle pour la course du ressort (L), en particulier pour cartouches d'encre, **caractérisé par le fait que** l'élément individuel (10, 20, 30) possède essentiellement une forme courbée en S et sur la totalité de la course du ressort (L) une courbe montante et descendante caractéristique des ressorts (K1), et que l'élément ressort consiste en au moins un autre élément individuel (15A, 15B ou 28, 29) qui présente une forme à courbe unique et possède sur la partie essentielle de la courbe du ressort une courbe montante caractéristique des ressorts (K2).

2. Elément ressort selon la revendication 1, **caractérisé par le fait que** le ou les autres éléments individuels (28, 29) sont intégrés dans les éléments individuels en forme de courbe en S (figure 6).

3. Elément ressort selon la revendication 2, **caractérisé par le fait que** le ou les autres éléments individuels (28, 29) ont la forme d'un noeud coulant à l'intérieur de la longueur du ressort en état comprimé.

4. Elément ressort selon la revendication 1 et l'une ou plusieurs des revendications 2 et 3, **caractérisé par le fait que** l'allongement élastique d'au moins un autre élément individuel (15A, 15B) est d'environ la moitié de l'allongement total du ressort.

5. Elément ressort selon la revendication 1 et l'une ou plusieurs des revendications 2 à 4, **caractérisé par le fait que** le ou les éléments individuels (13, 14A, 14B, 15A, 15B ou 21A, 21B, 22A, 22B, 15A, 15B ou 13, 27A, 27B, 28, 29) sont disposés entre deux parties de cadre (11, 12 ou 11', 12') et y sont fixés.

6. Elément ressort selon la revendication 1 et l'une ou plusieurs des revendications 2 à 5, **caractérisé par le fait que** l'élément ressort (10, 20, 30) est produit en une pièce dans le moulage par injection.

7. Elément ressort selon l'une ou plusieurs des revendications 1-6, **caractérisé par le fait que** le ou les éléments individuels (13, 14A, 14B ou 21A, 21B, 22A, 22B ou 13, 27A, 27B) présentent sur leur longueur des largeurs différentes en section transversale (b1, b2, b3 dans la figure 3, b dans la figure 5B) pour une hauteur pratiquement constante et présentent sur la longueur du ressort une répartition des tensions pratiquement constante sur leur surface.

8. Elément ressort selon l'une ou plusieurs des revendications 1 à 7, **caractérisé par le fait que** les éléments individuels ayant une forme courbe en S consistent en un élément central (13) et deux éléments latéraux qui y sont directement raccordés (14A et 14B ou 27A et 27B), tandis que l'élément central (13) possède environ le double d'élasticité par rapport à l'élasticité de chaque élément latéral (14A et 14B ou 27A et 27B).

9. Elément ressort selon l'une ou plusieurs des revendications 1 à 8, **caractérisé par le fait que** deux autres éléments individuels (15A et 15B ou 28 et 29) sont prévus, qui sont efficaces dans la partie essentielle de l'allongement du ressort, en particulier pour environ la moitié de l'allongement total (L) de l'élément ressort (10 ou 20 ou 30).

10. Elément ressort selon l'une ou plusieurs des revendications 1 à 8, **caractérisé par le fait que** le ou les autres éléments individuels (15A et 15B ou 27A et 27B) sont disposés à peu près symétriquement par rapport à l'élément central (13).

11. Elément ressort selon la revendication 1 et 5 et l'une ou plusieurs des revendications 4 et 6 à 16, **caractérisé par le fait qu'**au moins l'une des parties de cadre (11, 12 ou 11', 12') a la forme d'une partie couvercle (16) avec des découpes (17 - 19), qui présentent la forme de la projection des éléments individuels ayant une forme courbée en S (13, 14A, 14B) ou des éléments individuels ayant une forme courbée triangulaire en S (21A, 21B, 22A, 22B).

12. Elément ressort selon l'une ou plusieurs des revendications 1 à 11, **caractérisé par** un matériau en matière plastique ayant une cristallinité élevée, une limite d'étirage marquée et en dessous de la limite d'étirage ayant une force de rappel élevée.

13. Elément ressort selon la revendication 12,
**caractérisé par** un polyacétal, en particulier du polyoxyméthylène, comme matériau.

14. Elément ressort selon la revendication 12,
**caractérisé par le fait que** le matériau est une matière plastique thermoplastique ayant des propriétés de ressort.

15. Elément ressort selon la revendication 1 ou l'une ou plusieurs des revendications 2 à 14, **caractérisé par** l'utilisation dans une cartouche d'encre.

16. Elément ressort selon la revendication 1 ou l'une ou plusieurs des revendications 2 à 14, **caractérisé par** l'utilisation dans une cartouche d'encre d'imprimerie.

17. Cartouche d'encre, comprenant une gaine protectrice munie d'une tête de soutirage pour l'encre et d'un espace de réception d'encre en communication avec elle, qui est partiellement flexible et dans lequel est contenu un élément ressort maintenant une dépression, qui consiste en au moins un élément individuel (13, 14A, 14B ou 21A, 21B, 22A, 22B ou 13, 27A, 27B), avec lequel peut être exercé un effet de ressort relativement constant par l'intermédiaire d'une partie essentielle de déplacement de ressort de l'ensemble du déplacement du ressort (L), **caractérisée par le fait que** l'élément individuel (10, 20, 30) possède essentiellement une forme courbée en S et sur la totalité de la course du ressort (L) une courbe montante et descendante caractéristique des ressorts (K1), et que l'élément ressort consiste en au moins un autre élément individuel (15A, 15B ou 28, 29) qui présente une forme à courbe unique et possède sur la partie essentielle de la courbe du ressort une courbe montante caractéristique des ressorts (K2).

18. Cartouche d'encre selon la revendication 17,
**caractérisée par le fait que** le ou les éléments individuels (13, 14A, 14B, 15A, 15B ou 13, 27A, 27B, 28, 29) sont disposés entre deux parties de cadre (11, 12 ou 11', 12') et y sont fixés, tandis que les parties de cadre (11, 12 ou 11', 12') sont raccordées à des parties flexibles de l'espace de réception d'encre.

19. Cartouche d'encre selon la revendication 18,
**caractérisée par le fait qu'**au moins une partie de cadre (11, 12 ou 11', 12') constitue une partie de couvercle (16) munie de découpes (17 - 19), qui présentent la forme de la projection des éléments individuels ayant une forme courbée en S (13, 14A, 14B) ou des éléments individuels ayant une forme courbée triangulaire en S (21A, 21B, 22A, 22B), et le ou les éléments ressorts sont produits en une seule pièce avec les parties de cadre (11, 12 ou 11', 12') dans le moulage par injection, en particulier en polyoxyméthylène.

20. Cartouche d'encre selon la revendication 17 ou 18, **caractérisée par le fait que** le ou les éléments ressort consistent en un matériau en matière plastique ayant une cristallinité élevée, une limite d'étirage marquée et en dessous de la limite d'étirage ayant une force de rappel élevée, en particulier en un polyacétal.
